# EUROPÄISCHE PATENTSCHRIFT

(11) **EP 1 098 008 B1**
(45) Veröffentlichungstag und Bekanntmachung des Hinweises auf die Patenterteilung: **19.05.2004**
(21) Anmeldenummer: 99121832.2
(22) Anmeldetag: 04.11.1999
(51) Int. Cl.: C13F 1/00, C13G 1/00, B01D 1/26, B01D 1/30

(54) **Verdampfer**
Evaporator
Evaporateur

(43) Veröffentlichungstag der Anmeldung: 09.05.2001
(73) Patentinhaber: Balcke-Dürr Energietechnik GmbH, 40882 Ratingen (DE)
(72) Erfinder: Niepoth, Klaus, Dipl.-Ing., 47495 Rheinberg (DE); Morgenroth, Boris, Dipl.-Ing., 42489 Wülfrath (DE)
(74) Vertreter: Stenger, Watzke & Ring Patentanwälte

(56) Entgegenhaltungen:
- EP-A- 0 729 772
- EP-A- 0 853 224
- DE-A- 19 729 710
- DE-C- 962 600
- FR-A- 2 208 103
- US-A- 3 875 988
- US-A- 4 132 587
- US-A- 4 217 176

## Beschreibung

Die Erfindung betrifft einen insbesondere für die Zuckerindustrie bestimmten Verdampfer mit mindestens zwei Wärmeübertragern, denen das einzudickende Medium oben aufgegeben wird und die mit Dampf unterschiedlicher Zusammensetzung und/oder unterschiedlichen Druckes im Kreuzstrom beheizt werden, wobei das eingedickte Medium und der entstehende Brüden nach dem Austritt aus dem Wärmeübertrager getrennt abgeführt werden.

Derartige Wärmetauscher sind aus der EP 0 729 772 A2 bekannt. In einem gemeinsamen zylindrischen Gehäuse sind übereinander zwei Wärmeübertrager angeordnet, die jeweils eine eigene Medienverteilung und eine eigene Auffangwanne für das eingedickte Gut aufweisen. Die Beheizung des einen Wärmeübertragers erfolgt mit Heizdampf, der beispielsweise als Abzapfdampf von einer Dampfturbine stammt. Der im ersten Wärmeübertrager entstehende Brüden wird sodann als Heizmedium für den zweiten Wärmeübertrager verwendet. Das in einer Auffangwanne des oberen Wärmeübertragers aufgefangene Produkt wird über eine seitlich außerhalb des Gehäuses angeordnete Meß- und Regeleinrichtung dem Medienverteiler des nachfolgenden Wärmeübertragers zugeführt.

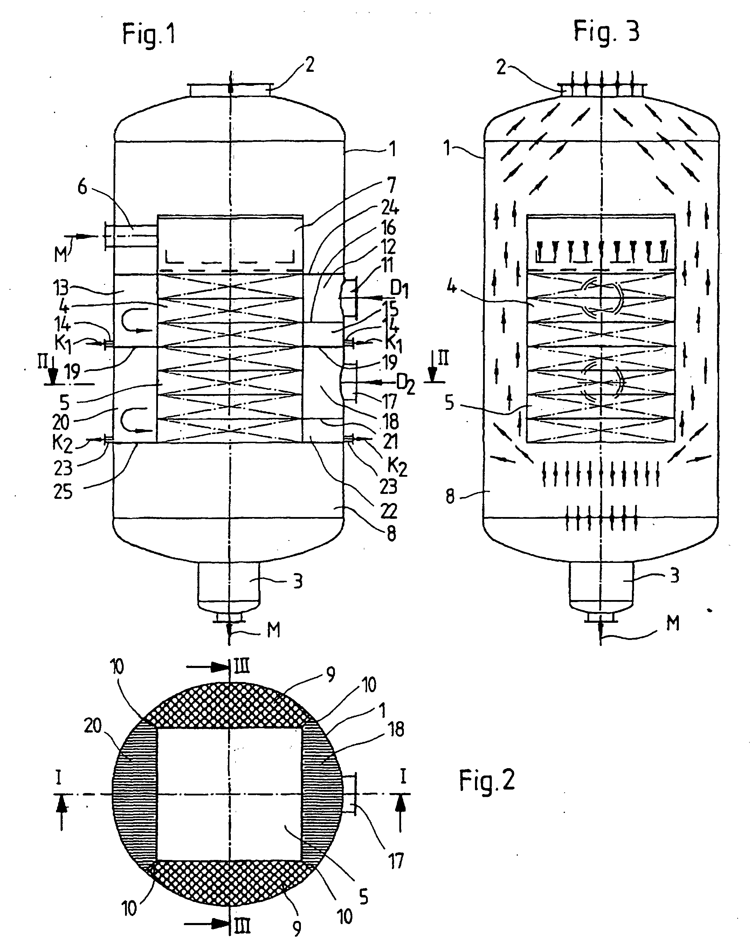

Diese Entgegenhaltung betrifft einen Verdampfer, der gemäß erstem Ausführungsbeispiel (vgl. Fig. 1) mit nur einem Wärmeübertrager 16 ausgestattet ist. Gemäß dem in Fig. 5 dargestellten Ausführungsbeispiel wird eine Kopplung zweier Verdampfer 10 und 10' zu einem gemeinsamen Verdampfer vorgeschlagen, wobei für jeden Verdampfer jeweils ein Wärmeübertrager vorgesehen ist, so daß sich in der Konsequenz ein Gesamt-Verdampfer ergibt, der über zwei Wärmeübertrager 16 und 16' verfügt. Diese beiden Wärmeübertrager sind gemäß den Ausführungen nach Fig. 5 voneinander separiert angeordnet und verfügen jeweils über eigene Medienverteilung 18 bzw. 18' sowie über eine dem jeweiligen Wärmeübertrager nachgeschaltete Trennung von Brüden und aufgegebenem Medium.

### DE 197 29 710

Mit dieser Offenlegungsschrift wird eine Vorrichtung zum Eindicken von Flüssigkeiten beschrieben, wobei die hier offenbarte Vorrichtung über nur einen Wärmetauscher verfügt. Gerichtet ist die Lehre dieser Offenlegungsschrift auf die Anordnung einer Reinigungsvorrichtung, die mit Hochdruck entweder mit dem der Beheizung dienenden Medium oder mit der einzudickenden Flüssigkeit betrieben wird. Sinn und Zweck der Reinigungsvorrichtung besteht dabei darin, etwaig auftretende Belege bzw. Verkrustungen auf den Wänden der Strömungskanäle des Wärmeübertragers zu reinigen.

### US 3,875,988

Mit dieser US-Schrift ist ein Mehrstufen-Verdampfer beschrieben, wobei der Clou dieses Verdampfers darin besteht, die einzelnen Verdampferkammern mittels eines Dampf-Strömungskanals strömungstechnisch miteinander zu verbinden, so daß in jeder Verdampferkammer zur Erhöhung des Wärmeaustauschkoeffizienten eine gerichtete Dampfableitung vorgesehen ist. Zu entnehmen ist dieser Zusammenfassung insbesondere der Fig. 1, die eine Verbindung der einzelnen Verdampferkammem 6 mittels der Dampfströmungsdurchgänge 11 zeigt.

### FR 2 208 103

Diese französische Druckschrift zeigt schließlich einen Verdampfer, bei dem eine eingebrachte Flüssigkeit vollständig verdampft werden soll. Die besondere Problematik die beim Eindicken einer Flüssigkeit entsteht, nämlich das Abführen des eingedickten Mediums einerseits und der während des Eindickvorgangs entstehenden Brüden andererseits, ist nicht Inhalt dieser Entgegenhaltung.

Der Erfindung liegt die **Aufgabe** zugrunde, einen Verdampfer zu schaffen, der im Aufbau einfacher und kostengünstiger ist und bei dem dennoch die Möglichkeit besteht, die Wärmeübertrager mit unterschiedlichem Dampf zu beheizen.

Die **Lösung** dieser Aufgabenstellung durch die Erfindung ist dadurch gekennzeichnet, daß das einzudickende Medium durch eine allen Wärmeübertragem gemeinsame Medienverteilung aufgegeben wird und das den ersten Wärmeübertrager verlassende Medium unmittelbar in den nächstfolgenden Wärmeübertrager gelangt, daß erst nach Austritt des Mediums aus dem zweiten Wärmeübertrager eine Trennung von Brüden und Medium erfolgt und daß die gegenüber dem Brüdenraum abgetrennten Dampfräume der Wärmeübertrager durch eine gemeinsame Trennwand voneinander getrennt sind.

Durch die erfindungsgemäße Ausgestaltung des Verdampfers wird trotz des Vorhandenseins von mindestens zwei Wärmeübertragern nur eine Medienverteilung benötigt. Das einzudickende Medium durchströmt die Wärmeübertrager aufgrund der Schwerkraft und wird aus dem unteren Teil des Verdampfers abgezogen. Jeder einzelne Wärmeübertrager ist trotz Bildung einer Baueinheit unabhängig mit Dampf beheizbar, so daß als Heizmedium Dampf mit unterschiedlicher Zusammensetzung und/oder unterschiedlichem Druck verwendet werden kann. Insbesondere ist es möglich, einen Wärmeübertrager mit verunreinigten oder aggressiven Medien zu beheizen, beispielsweise mit Dampf, der durch aggressive Inhaltsstoffe verunreinigt ist, beispielsweise mit Rückständen aus dem Schnitzeltrockner.

Gemäß einem weiteren Merkmal der Erfindung können die Kondensate der Wärmeübertrager über getrennte Leitungen aus den Wärmeübertragern abgeführt werden, so daß auch diesbezüglich eine Trennung zwischen aggressiven und nicht aggressiven Medien möglich ist. Wenn der Wärmeübertrager mit aggressivem Dampf beheizt wird, ist es möglich, die Wärmeübertrager aus unterschiedlichen Materialien herzustellen. Der mit aggressivem Medium beheizte Wärmeübertrager besteht dann aus korrosionsbeständigem Material.

Für eine bevorzugte Ausführungsform der Erfindung wird schließlich vorgeschlagen, den ersten Wärmeübertrager mit Brüden aus beispielsweise einem Dampftrockner für Schnitzel und den zweiten Übertrager mit Turbinendampf aus einem Kraftwerk zu betreiben.

Auf der Zeichnung ist ein Ausführungsbeispiel des erfindungsgemäßen Verdampfers schematisch dargestellt, und zwar zeigt:
- Fig. 1: einen Längsschnitt durch den Wärmeübertrager,
- Fig. 2: einen Querschnitt gemäß der Schnittlinie II-II in Fig. 1 und
- Fig. 3: einen weiteren Längsschnitt gemäß der Schnittlinie III-III in Fig. 1.

Der Verdampfer besteht aus einem zylindrischen Gehäuse 1, das am oberen Ende mit einem Brüdenaustritt 2 und am unteren Ende mit einem Austritt 3 für das einzudickende Medium versehen ist. Unter Freilassung eines allseitigen Ringraumes sind im Inneren des Gehäuses 1 Wärmeübertrager 4 und 5 angeordnet, die jeweils aus Plattenelementen bestehen, die im Kreuzstrom durchströmt werden.

Das einzudickende Medium gelangt durch einen seitlichen Eintrittstutzen 6 in eine im Gehäuse 1 angeordnete Mediumaufgabe 7, die durch geeignete Verteilbleche dafür sorgt, daß es gleichmäßig auf den darunter befindlichen Wärmeübertrager 4 aufgegeben wird. Das einzudickende Medium durchströmt die senkrechten Kanäle des Wärmeübertragers 4 und des Wärmeübertragers 5 und tritt unterhalb des Wärmeübertragers 5 in einen Brüdenraum 8 ein, der den gesamten Querschnitt des Gehäuses 1 einnimmt. In diesem Brüdenraum 8 erfolgt eine Trennung des Brüdens von dem einzudickenden Medium, das aufgrund der Schwerkraft in den Austritt 3 gelangt, aus dem es aus dem Gehäuse 1 abgezogen wird. Dies ist durch die Pfeile M am Eintrittstutzen 6 bzw. am Austritt 3 angedeutet.

Der Brüden steigt über zwei seitliche Brüdenkanäle 9 im Gehäuse 1 nach oben und wird durch den Brüdenaustritt 2 abgezogen. Die Brüdenkanäle werden durch den Raum zwischen dem Gehäuse 1 und den Wärmeübertragern 4 und 5 gebildet und sind durch Trennbleche 10 vom benachbarten Teil des Gehäuseinnern abgetrennt. Ihre Lage ergibt sich insbesondere aus Fig. 2.

Durch einen seitlichen Dampfstutzen 11 wird beispielsweise aus einem Schnitzeltrockner stammender Dampf D₁ einem Dampfraum 12 zugeleitet, der zwischen der Wand des Gehäuses 1 und den waagerechten Eintrittskanälen des Wärmeübertragers 4 gemäß Fig. 1 gebildet wird. Dieser Dampf D₁ durchströmt etwa zwei Drittel der waagerechten Kanäle des Wärmeübertragers 4 und gelangt in eine Wendekammer 13, in der er umgeleitet und in die restlichen waagerechten Kanäle des Wärmeübertragers 4 eintritt. In diesen restlichen Kanälen des Wärmeübertragers 4 kondensiert der Dampf D₁. Das Kondensat K₁ wird durch die Kondensatstutzen 14 abgezogen. Unterhalb des Dampfraumes 12 ist ein Kondensatraum 15 gebildet, der durch eine Trennwand 16 vom Dampfraum 12 abgetrennt ist.

In gleicher Weise wird der Wärmeübertrager 5 durch einen seitlichen Dampfstutzen '17 mit Dampf D₂ beheizt, bei dem es sich beispielsweise um Turbinendampf handelt. Dieser Dampf D₂ gelangt in einen Dampfraum 18, der wie der Dampfraum 12 durch die Außenwand des Gehäuses 1, die die waagerechten Kanäle enthaltenden Wände des Wärmeübertragers 5 und durch die Trennwände 10 gebildet wird. Gegenüber dem Dampfraum 12 ist der Dampfraum 18 durch eine beiden Dampfräumen 12 und 18 gemeinsame Trennwand 19 abgetrennt, die auch auf der gegenüberliegenden Seite eine Trennung zwischen der Wendekammer 13 und einer Wendekammer 20 des Wärmeübertragers 5 bewirkt.

Über diese Wendekammer 20 gelangt der Dampf D₂ aus den oberen waagerechten Kanälen des Wärmeübertragers 5 in den restlichen Teil der waagerechten Kanäle, in denen der Dampf D₂ kondensiert. Das Kondensat K₂ wird aus dem unterhalb des Dampfraumes 18 durch eine Trennwand 21 gebildeten Kondensatraum 22 mittels eines Kondensatstutzens 23 abgezogen. Ein derartiger Kondensatstutzen 23 kann auch auf der gegenüberliegenden Seite an der Wendekammer 20 angeordnet sein.

Da die Trennwand 19 zusätzlich zu den oberen Trennwänden 24 und unteren Trennwänden 25 im Bereich der Dampfräume 12 und 18 bzw. Wendekammern 13 und 20 angeordnet ist, erfolgt eine vollständige Trennung zwischen Dampf D₁ und Dampf D₂, so daß die Wärmeübertrager 4 und 5 unabhängig voneinander beheizt werden können.

### Bezugszeichenliste

- 1: Gehäuse
- 2: Brüdenaustritt
- 3: Austritt
- 4: Wärmeübertrager
- 5: Wärmeübertrager
- 6: Eintrittsstutzen
- 7: Medienaufgabe
- 8: Brüdenraum
- 9: Brüdenkanal
- 10: Trennwand
- 11: Dampfstutzen
- 12: Dampfraum
- 13: Wendekammer
- 14: Kondensatstutzen
- 15: Kondensatraum
- 16: Trennwand
- 17: Dampfstutzen
- 18: Dampfraum
- 19: Trennwand
- 20: Wendekammer
- 21: Trennwand
- 22: Kondensatraum
- 23: Kondensatstutzen
- 24: obere Trennwand
- 25: untere Trennwand

- M: Medium
- D₁: Dampf
- D₂: Dampf
- K₁: Kondensat
- K₂: Kondensat

## Patentansprüche

1. Verdampfer, insbesondere für die Zuckerindustrie, mit mindestens zwei Wärmeübertragern (4, 5), auf die das einzudickende Medium (M) oben aufgebbar ist und die mit Dampf (D₁, D₂) unterschiedlicher Zusammensetzung und/oder unterschiedlichen Druckes im Kreuzstrom beheizbar sind, wobei das eingedickte Medium und der entstehende Brüden nach dem Austritt aus den Wärmeübertragern (4, 5) getrennt abführbar sind, wobei für alle Wärmeübertrager (4, 5) eine gemeinsame Medienverteilung (7) vorgesehen ist, wobei die einzelnen Wärmeübertrager (4) in Strömungsrichtung des Mediums (M) unmittelbar hintereinander angeordnet sind, wobei erst nach Austritt des Mediums (M) aus dem zweiten Wärmeübertrager (5) eine Trennung von Brüden und Medium durchführbar ist und wobei für jeden der Wärmeübertrager (4, 5) ein separater, gegenüber dem Brüdenraum (8) abgetrennter Dampfraum (12, 18) vorgesehen ist, wobei benachbarte Dampfräume (12, 18) durch eine gemeinsame Trennwand (19) voneinander getrennt sind.

2. Verdampfer nach Anspruch 1 oder 2, **dadurch gekennzeichnet, daß** die Kondensate der Wärmeübertrager (4, 5) über getrennte Leitungen abführbar sind.

3. Verdampfer nach Anspruch 1, **dadurch gekennzeichnet, daß** die Wärmeübertrager (4, 5) aus unterschiedlichen Materialien bestehen.

4. Verdampfer nach Anspruch 1 bis 3, **dadurch gekennzeichnet, daß** der erste Wärmeübertrager (4) mit Brüden aus beispielsweise einem Dampftrockner für Schnitzel und der zweite Wärmeübertrager (5) mit Turbinendampf aus einem Kraftwerk beheizbar ist.

## Claims

1. An evaporator particularly for the sugar industry, including at least two heat exchangers (4, 5) on to the top of which the medium (M) to be concentrated may be fed and which are heatable with steam (D₁, D₂) of different composition and/or of different pressure in countercurrent, whereby the concentrated medium and the resulting vapours may be conducted away separately after leaving the heat exchangers (4, 5), a common medium distributor (7) being provided for all the heat exchangers (4, 5), the individual heat exchangers (4) being arranged directly behind one another in the flow direction of the medium (M), whereby separation of vapours and medium may be performed only after the medium (M) leaves the second heat exchanger (5) and wherein a separate steam space (12,18), separated from the vapour space (8), is provided for each of the heat exchangers (4, 5), adjacent steam spaces (12, 18) being separated from one another by a common partition wall (19).

2. An evaporator as claimed in claim 1 or claim 2 **characterised in that** the conduits from the heat exchanger (4, 5) may be conducted away by separate conduits.

3. An evaporator as claimed in claim 1 **characterised in that** the heat exchangers (4, 5) comprised different materials.

4. An evaporator as claimed in claims 1 to 3, **characterised in that** the first heat exchanger (4) is heatable with vapours from, for instance, a steam drier for pulp and the second heat exchanger (5) is heatable with turbine steam from a power station.

## Revendications

1. Evaporateur destiné notamment à l'industrie sucrière, comportant au moins deux échangeurs de chaleur (4, 5) auxquels le fluide à épaissir (M) peut être amené par le haut, et qui peuvent être chauffés à courants croisés avec de la vapeur (D₁, D₂) de différentes compositions et/ou à différentes pressions, le fluide épaissi et les buées engendrées pouvant être évacués séparément après la sortie des échangeurs de chaleur (4, 5), une répartition commune (7) de fluide étant prévue pour tous les échangeurs de chaleur (4, 5), les différents échangeurs de chaleur (4) étant disposés directement l'un après l'autre dans le sens de circulation du fluide (M), une séparation entre les buées et le fluide ne pouvant être effectuée qu'après la sortie du fluide (M) du deuxième échangeur de chaleur (5), et une chambre (12, 18) de vapeur séparée de la chambre de buées (8) étant prévue séparément pour chaque échangeur de chaleur (4, 5), des chambres (12, 18) de vapeur adjacentes étant séparées entre elles par une cloison de séparation commune (19).

2. Evaporateur selon la revendication 1, **caractérisé en ce que** les condensats des échangeurs de chaleur (4, 5) peuvent être évacués par l'intermédiaire de conduites séparées.

3. Evaporateur selon la revendication 1, **caractérisé en ce que** les échangeurs de chaleur (4, 5) sont constitués de différents matériaux.

4. Evaporateur selon l'une quelconque des revendications 1 à 3, **caractérisé en ce que** le premier échangeur de chaleur (4) peut être chauffé avec des buées provenant par exemple d'un sécheur à vapeur pour pulpes, et le deuxième échangeur de chaleur (5) avec de la vapeur de turbine provenant d'une centrale.
